(19) Europäisches Patentamt
European Patent Office
Office européen des brevets

(11) **EP 4 134 762 A1**

(12) **EUROPEAN PATENT APPLICATION**
published in accordance with Art. 153(4) EPC

(43) Date of publication:
**15.02.2023 Bulletin 2023/07**

(21) Application number: **21784255.8**

(22) Date of filing: **09.04.2021**

(51) International Patent Classification (IPC):
**G05B 19/404** (1995.01)     **B23Q 17/00** (1968.09)
**B23Q 17/22** (1985.01)

(52) Cooperative Patent Classification (CPC):
**B23Q 17/00; B23Q 17/22; G05B 19/404**

(86) International application number:
**PCT/JP2021/015080**

(87) International publication number:
**WO 2021/206172 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2020   JP 2020071116**

(71) Applicant: **Makino Milling Machine Co., Ltd.
Tokyo 152-8578 (JP)**

(72) Inventor: **KAWABE, Tomohiro
Nagoya-shi, Aichi 243-0303 (JP)**

(74) Representative: **McWilliams, David John
Withers & Rogers LLP
2 London Bridge
London SE1 9RA (GB)**

(54) **MACHINING METHOD**

(57)     Provided is a machining method for performing machining by relatively moving a rotary tool (T) equipped to a main shaft (25) and a workpiece (W) fixed to a rotary table (35) in a machining tool (11) having a linear feed shaft and a rotary feed shaft, wherein a test workpiece (1) is fixed on the rotary table, the positions of the test workpiece are determined with a plurality of orientations, a prescribed portion of the surface of the test workpiece is machined by the rotary tool (2) used during main machining, each machined surface portion of the test workpiece is measured, and, on the basis of the measurement results, an error in the rotary feed shaft is corrected with position information about the rotary center of the rotary table with respect to machine coordinates and a correction amount of a tool length of the rotary tool.

FIG. 1

EP 4 134 762 A1

## Description

FIELD

The present invention relates to a machining method by a machine tool having rotary feed shafts in addition to three orthogonal axial linear feed shafts.

BACKGROUND

For example, in a machine tool which has rotary feed shafts, such as a five-axis machining center, it is not possible to machine with high accuracy due to position errors of the rotation axes of the rotary feed shafts. Patent Literature 1 describes a method for calculating position error and inclination error of a rotation axis of a rotary feed shaft of such a machine tool.

In the method described in Patent Literature 1, a workpiece table is rotated relative to a spindle and positioned in at least three measurement positions having different rotation angles, the center position of a reference sphere arranged on the workpiece table is measured with a touch sensor mounted on the spindle, a direction vector of the rotation axis is calculated based on the center position of the reference sphere measured at each measurement position, and an inclination error of the actual direction vector with respect to the reference direction vector of the rotation axis is calculated.

[CITATION LIST]

[PATENT LITERATURE]

[PTL 1] Japanese Unexamined Patent Publication (Kokai) No. 2005-061834

SUMMARY

[TECHNICAL PROBLEM]

In the method described in Patent Literature 1, since measurement is performed under conditions and in an environment different from actual machining, such as stoppage of the coolant or spindle, when machining is performed reflecting the measurement results, the actual machining (main machining) is performed without knowing what the actual machining accuracy will be.

The present invention aims to solve such problems of the prior art, and an object thereof is to provide a machining method with which a workpiece can accurately be machined even with a rotary feed shaft rotation axis having position error, inclination error, or runout.

[SOLUTION TO PROBLEM]

In order to achieve the object described above, according to the present invention, there is provided a machining method wherein machining is performed by moving a rotary tool attached to a spindle and a workpiece affixed to a rotating table relative to each other with a machine tool having linear feed shafts and rotary feed shafts, the method comprising the steps of affixing a test workpiece to the rotating table, positioning the test workpiece in a plurality of postures and machining a predetermined portion of a surface of the test workpiece with a rotary tool to be used during main machining of the workpiece, measuring each machined surface portion of the test workpiece, correcting, based on the measured results, an error of the rotary feed shaft with position information of a center of rotation of the rotating table relative to the machine coordinate system and a tool length correction amount of the rotary tool, and machining the workpiece.

[ADVANTAGEOUS EFFECTS OF INVENTION]

According to the present invention, predetermined surface portions of a test workpiece are machined prior to main machining under the same conditions and in the same environment as actual machining (main machining), the surface portions are measured to determine the center of the axis of rotation, and based thereon, correction amounts are determined by calculation, whereby a workpiece can be machined with high accuracy even if the rotation axis of the rotary feed shaft has a position error, inclination error, or runout.

BRIEF DESCRPITION OF DRAWINGS

FIG. 1 is a perspective view of a machine tool to which the present invention is applied.
FIG. 2 is a schematic side view of portions of a bed, moving body, and spindle head of the machine tool of FIG. 1.
FIG. 3 is a perspective view of the rotating table of the machine tool of FIG. 1.
FIG. 4 is a perspective view of the rotating table rotated 180° in the B-axis direction from the state shown in FIG. 1.
FIG. 5 is a block diagram of a controller of a machine tool according to an embodiment of the present invention.
FIG. 6 is a perspective view detailing the machining of a test workpiece.
FIG. 7 is a perspective view detailing the machining of a test workpiece.
FIG. 8 is a perspective view detailing the machining of a test workpiece.
FIG. 9 is a perspective view detailing the machining of a test workpiece.
FIG. 10 is a perspective view detailing the measurement of the machined surface of the test workpiece.
FIG. 11 is a perspective view detailing the measurement of the machined surface of the test workpiece.

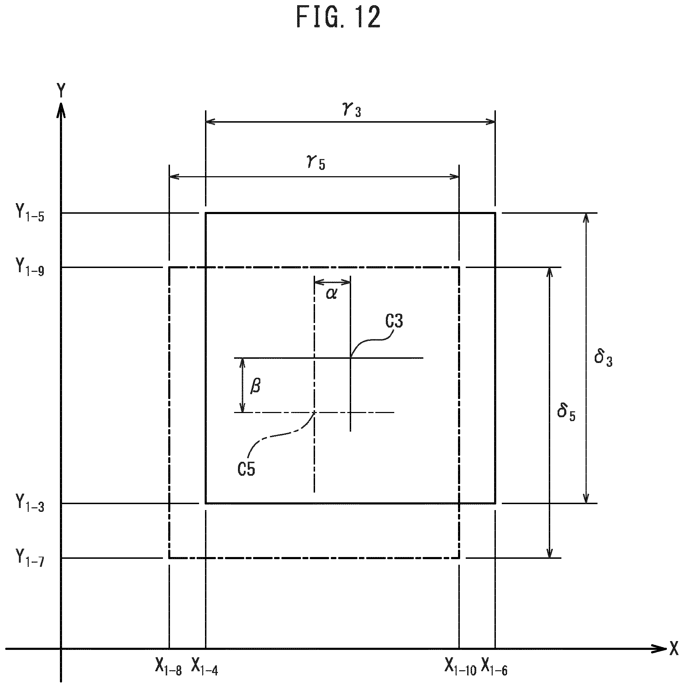

FIG. 12 is a perspective view detailing each parameter for obtaining a correction amount from measurement results.

FIG. 13 is a schematic view of an input screen for inputting machining parameters for a test workpiece.

FIG. 14 is a schematic view of an input screen for inputting tool parameters and machining condition parameters for machining a test workpiece.

FIG. 15 is a schematic view of a correction amount display screen on which calculation results of correction amounts are displayed.

DESCRIPTION OF EMBODIMENTS

Preferred embodiments of the present invention will be described below with reference to the attached drawings.

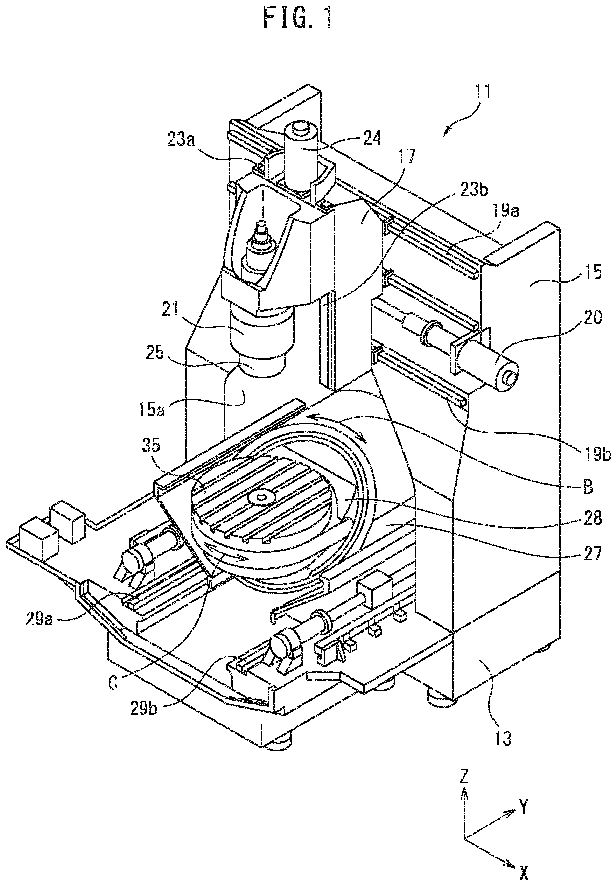

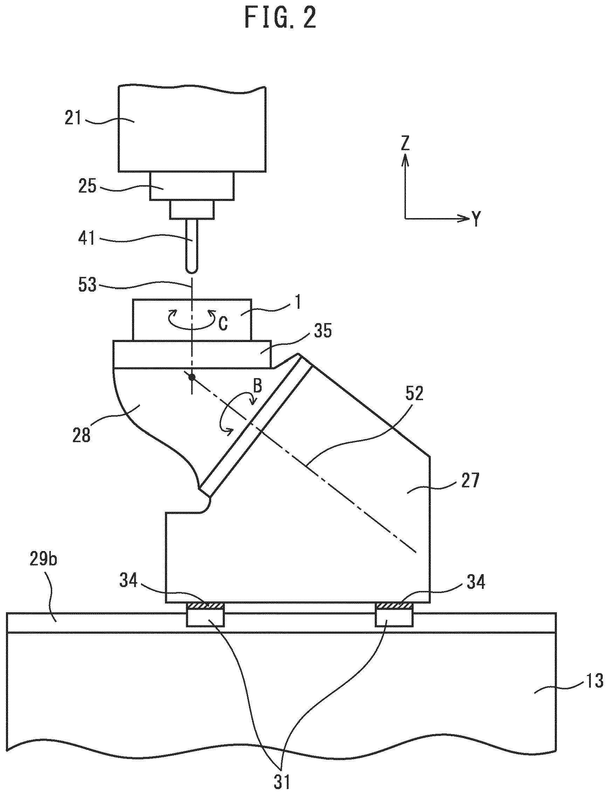

First, with reference to FIGS. 1 and 2, an example of a machine tool to which the present invention is applied will be described.

In FIGS. 1 and 2, a machine tool 11 comprises a bed 13 as a pedestal, and a column 15 which stands on an upper surface of the bed 13. A moving body 27 is arranged on the upper surface of the bed 13. The moving body 27 supports a rotating table 35 which rotates a workpiece W via an inclining turntable 28. The rotating table 35 has a workpiece attachment surface 35a to which the workpiece W is affixed.

A saddle 17 is arranged on the front surface of the column 15. Further, a spindle head 21 is arranged on the front surface of the saddle 17. A spindle 25 is attached to the spindle head 21. A rotary tool T for machining the workpiece W is attached to the spindle 25. The rotary tool T machines the workpiece W while rotating along with the spindle 25.

The machine tool 11 of the present embodiment comprises a motion device which changes the relative positions of the rotary tool T and the workpiece W. In the present embodiment, a machine coordinate system is set using a predetermined position on the machine tool as the origin. The mutually orthogonal X-axis, Y-axis, and Z-axis are predetermined in the machine coordinate system. When designing the machine tool, the direction in which the axis of the spindle 25 extends (vertical direction in FIG. 1) is referred to as the Z-axis. Furthermore, the axis extending in the horizontal direction in which the moving body 27 moves is referred to as the Y-axis. The axis extending in the horizontal direction in which the saddle 17 moves, i.e., in the direction perpendicular to the Z-axis and the Y-axis, is referred to as the X axis.

The motion device can relatively move the rotary tool T and the workpiece W in the X-axis direction, the Y-axis direction, and the Z-axis direction. Furthermore, the motion device can rotate the workpiece W relative to the rotary tool T in the B-axis direction about an axis 52 of the inclining turntable 28 and in the C-axis direction about an axis 53 of the rotating table 35.

The motion device includes an X-axis motion device which moves the rotary tool T relative to the workpiece W in the X-axis direction. The X-axis motion device includes a pair of X-axis rails 19a, 19b formed on the front surface of the column 15. The saddle 17 is formed so as to be capable of reciprocating along the X-axis rails 19a, 19b. The X-axis motion device moves the saddle 17 by means of a ball screw mechanism. The X-axis motion device includes an X-axis servomotor 20 which rotates the threaded shaft of the ball screw mechanism. The X-axis motion device moves the saddle 17 by driving the X-axis servomotor 20. The spindle head 21 and the rotary tool T move in the X-axis direction together with the saddle 17.

The motion device includes a Z-axis motion device which moves the rotary tool T relative to the workpiece W in the Z-axis direction. The Z-axis motion device includes a pair of Z-axis rails 23a, 23b formed on the front surface of the saddle 17. The spindle head 21 is formed so as to be capable of reciprocating along the Z-axis rails 23a, 23b. The Z-axis motion device moves the spindle head 21 by means of a ball screw mechanism. The Z-axis motion device includes a Z-axis servomotor 24 which rotates the threaded shaft of the ball screw mechanism. The Z-axis motion device moves the spindle head 21 by driving the Z-axis servomotor 24. The rotary tool T moves in the Z-axis direction together with the spindle head 21. Further, a drive motor which rotates the spindle 25 about the axis is arranged inside the spindle head 21.

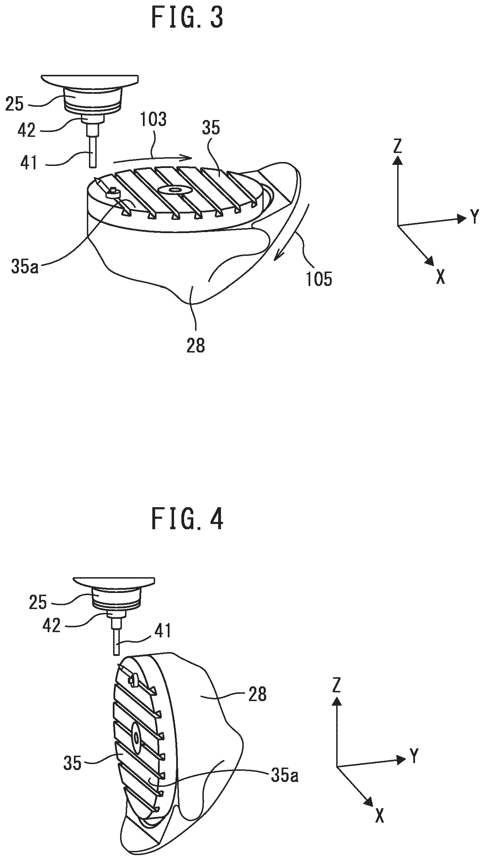

FIG. 3 shows a schematic perspective view of a Y-axis motion device according to the embodiment of the present embodiment. With reference to FIGS. 1 to 3, the motion device includes a Y-axis motion device which moves the rotary tool T relative to the workpiece W in the Y-axis direction. The Y-axis motion device includes a pair of Y-axis rails 29a, 29b arranged on the upper surface of the bed 13. The moving body 27 is formed so as to be capable of reciprocating along the Y-axis rails 29a, 29b. A hollow part 15a is formed in the column 15 so that the moving body 27 can move in the Y-axis direction.

The Y-axis motion device moves the moving body 27 by means of a ball screw mechanism 30. The Y-axis motion device includes a Y-axis servomotor 32 which rotates the threaded shaft of the ball screw mechanism. The Y-axis motion device moves the moving body 27 by driving the Y-axis servomotor 32. The inclining turntable 28 and the rotating table 35 move in the Y-axis direction together with the moving body 27.

The motion device includes a B-axis rotation motion device which rotates the rotary tool T relative to the workpiece W in the B-axis direction. The B-axis axis 52 of the present embodiment is not parallel to any of the X-axis, the Y-axis, and the Z-axis. Specifically, the B-axis axis 52 is inclined with respect to each of the three linear motion axes. The B-axis rotation motion device includes the inclining turntable 28. A servomotor for rotating the inclining turntable 28 is arranged inside the moving body 27. By driving the servomotor of the inclining turntable 28, the inclining turntable 28 rotates about the B-axis axis 52. The workpiece W rotates in the B-axis direction together with the inclining turntable 28 and the rotating table 35.

The motion device of the present embodiment includes a C-axis rotation motion device which rotates the rotary tool T relative to the workpiece W in the C-axis direction. The C-axis axis 53 is designed so as to be parallel to the Z-axis when the inclining turntable 28 is at a predetermined angular position in the B-axis direction. The C-axis rotation motion device includes the rotating table 35. A servomotor is arranged inside the inclining turntable 28. By driving this servomotor, the rotating table 35 rotates about the C-axis axis 53. The workpiece W rotates in the C-axis direction together with the rotating table 35.

As described above, the machine tool 11 has three linear motion axes along which the spindle 25 moves relative to the workpiece W. Specifically, the machine tool 11 has an X-axis, a Y-axis, and a Z-axis as linear motion axes. In the present embodiment, the first linear motion axis will be described as the Y-axis, the second linear motion axis will be described as the Z-axis, and the third linear motion axis will be described as the X-axis. Further, the machine tool 11 has two rotation axes around which the spindle 25 rotates relative to the workpiece W. Specifically, the machine tool 11 has a B-axis axis 52 and a C-axis axis 53 as rotation axes. In the present embodiment, the first rotation direction will be referred to as the C-axis direction, and the second rotation direction will be referred to as the B-axis direction. Further, the first axis will be referred to as the C-axis axis 53, and the second axis will be referred to as the B-axis axis 52.

The machine tool of the present embodiment comprises a controller 70. The controller 70 is connected to the servo motors and drive motors of the motion device. The controller 70 can move the rotary tool T relative to the workpiece W by controlling the servo motors of the motion device.

Referring to FIGS. 1 and 2, it is preferable that the machine tool 11 be produced so that when the rotation angle of each rotation axis is 0°, the surface of the rotating table 35 is exactly parallel to the plane including the X-axis and the Y-axis of the machine coordinate system, i.e., the XY plane, and the B-axis axis 52 and the C-axis axis 53 intersect. However, due to production errors, aging, etc., the surface of the rotating table 35 may be slightly inclined, and the axis 52 and the axis 53 may be slightly separated from each other.

The machine tool 11 comprises an angle adjustment device as an adjustment means for adjusting the inclination of the moving body 27. In the present embodiment, the inclination of the moving body 27 is adjusted so that the B-axis axis 52 and the C-axis axis 53 extend parallel to the YZ plane over the Y-axis stroke of the moving body 27. In the present embodiment, the state in which the B-axis axis 52 and the C-axis axis 53 extend parallel to the YZ plane while the moving body 27 is moving in the Y-axis direction is referred to as the reference state.

Furthermore, the machine tool 11 comprises the controller 70. The controller 70 includes a reading and interpretation unit 72, an interpolation calculation unit 73, and a servo motor control unit 74. The reading and interpretation unit 72 reads an input program 71 and sends programmed motion commands to the interpolation calculation unit 73. The interpolation calculation unit 73 calculates position command values for each interpolation cycle and sends the position command values to the servo motor control unit 74. For example, the interpolation calculation unit 73 calculates the movement amount for each time interval set based on the motion commands. The servo motor control unit 74 drives each axial servo motor 75 based on the position command values. Further, the controller 70 includes a calculation unit 76 connected to a measurement device 40, which described later, and a storage unit 77 connected to the reading and interpretation unit 72 and the calculation unit 76.

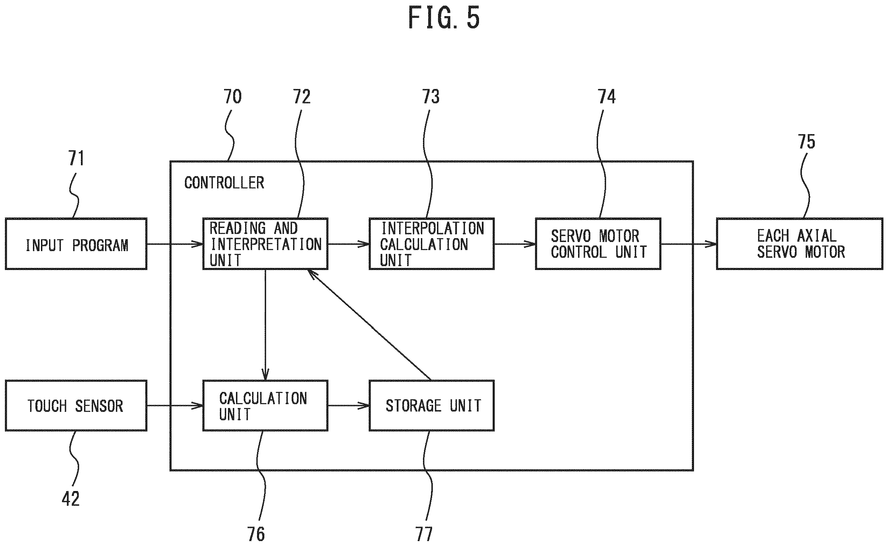

The mode of operation of the present invention will be described below with reference to FIGS. 3 to 8.

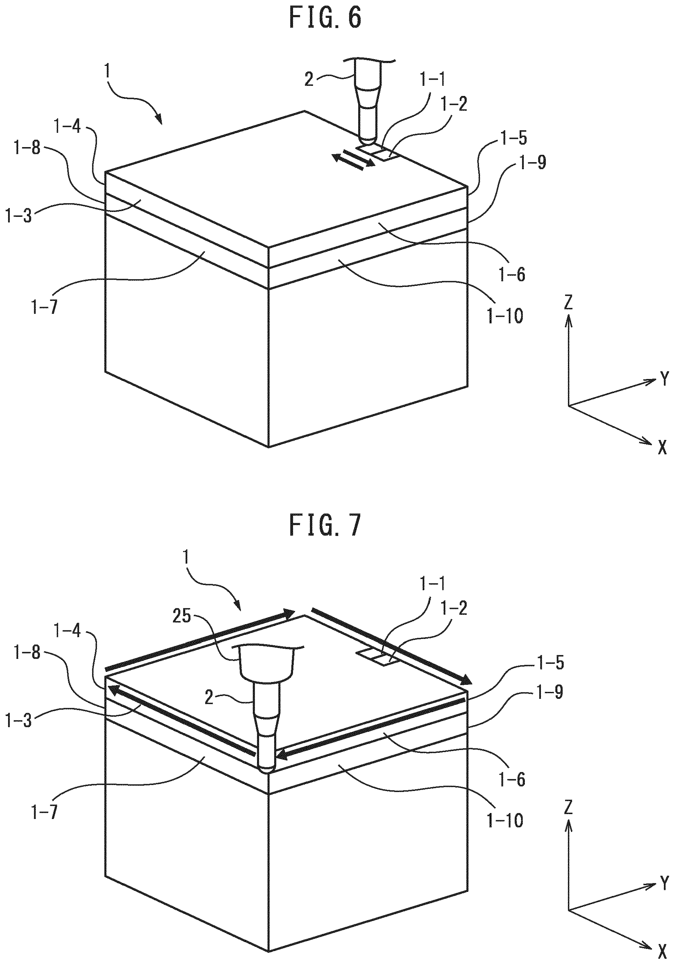

In the present invention, predetermined surface portions of a test workpiece 1 (FIGS. 6 to 11) are machined prior to main machining of a workpiece W. At this time, the rotary tool 2 used for machining the test workpiece 1 is the same rotary tool T as the rotary tool T used for main machining. The rotary tool 2 can be a ball end mill. The test workpiece 1 has a rectangular cuboid shape. In the present invention, the rectangular cuboid shape includes a cubic shape.

First, prior to machining the test workpiece 1, the rotating table 35 is arranged at the position shown in FIG. 3. In this position, the workpiece attachment surface 35a of the rotating table 35 is arranged perpendicular to the Z-axis. This position of the rotating table 35 is referred to as the first position. The rotating table 35 is arranged in the second position shown in FIG. 4 by feeding the rotating table 35 180° in the B-axis direction from the first position as indicated by arrow 105. At this time, the workpiece attachment surface 35a of the rotating table 35 is arranged perpendicular to the workpiece attachment surface 35a of the rotating table 35 when in the first position, parallel to the Z axis, which is one of the three orthogonal axes, and perpendicular to the other axis, which is the Y-axis in the present embodiment.

When the rotating table 35 is in the first position, the B-axis is in the 0° (zero degree) rotation position. When the B-axis is at 0° and the C-axis is at the 0° rotation position, the rotating table 35 is said to be in the first posture. Specifically, when the rotating table 35 is in the first posture, both the B-axis and the C-axis are at the origin position. When the rotating table 35 is fed from the first posture by rotating only the B-axis by 180° toward the second position, as indicated by arrow 105, without rotating the C-axis, the rotating table 35 moves to a rotational position where the B-axis is 180° and the C-axis is 0°. This rotational position is referred to as the second posture of the rotating table 35.

The rotation position when the C-axis is rotated by 90° from the second posture is set as the third posture of the rotating table 35, and the rotation position when the C-axis is further rotated by 90° is set as the fourth posture of the rotating table 35. The rotational position when the C-axis is further rotated by 90° is set as the fifth posture of the rotating table 35.

The test workpiece 1 is arranged on the workpiece attachment surface 35a of the rotating table 35 in the first posture so that the two opposing side surfaces thereof are perpendicular to the X-axis and the other two opposing side surfaces thereof are perpendicular to the Y-axis. At this time, one side surface (upper surface) of the test workpiece attached to the workpiece attachment surface 35a is perpendicular to the Z-axis, which is one of the three orthogonal axes, and faces the rotary tool 2.

The upper surface facing the rotary tool 2 has two surface portions 1-1, 1-2 to be test-machined. Furthermore, in test workpiece 1, each of the four side surfaces perpendicularly connected to the upper surface having the two surface portions 1-1, 1-2 has two surface portions 1-3, 1-7; 1-4, 1-8; 1-5, 1-9; 1-6, 1-10 to be test-machined by the rotary tool 2. The two surface portions 1-1, 1-2 on the upper surface can be rectangular, preferably square, and can be preferably rectangular including one ridge (edge) of the rectangular cuboid test workpiece 1. Each of the two surface portions of the four side surfaces connected to the top surface can have a rectangular or strip shape of a constant width.

First, the rotating table 35 is arranged in the first posture, and one of the two surface portions on the upper surface of the test workpiece 1 is machined by the tip of the rotary tool 2 while linearly feeding the rotating table 35 in the three orthogonal axes (X-axis, Y-axis, Z-axis). Next, one of the two surface portions to be machined on each of the four side surfaces connected perpendicularly to the top surface of test workpiece 1, and in the present embodiment, the one on the upper side, and specifically, each surface portion 1-3, 1-4, 1-5, 1-6 connected to the upper surface of test workpiece 1, is machined by the side surface of the rotary tool 2 as shown in FIG. 7. The machining mode by such linear feeding in the orthogonal three-axis (X-axis, Y-axis, Z-axis) direction is referred to as three-axis machining.

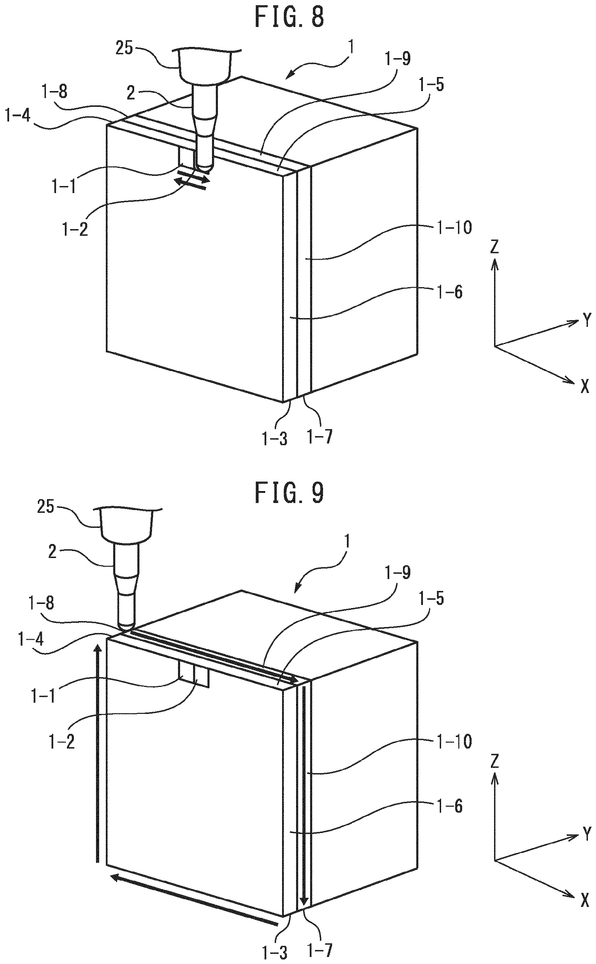

After the surface portions 1-3, 1-4, 1-5, 1-6 of the four side surfaces have been machined with the side surface of the rotary tool 2, the rotating table 35 is then rotated and fed in the B-axis direction so as to be arranged in the second position (FIG. 4). At this time, one of the side surfaces of the test workpiece 1 is arranged perpendicular to the Z-axis and faces the rotary tool 2. Next, the rotating table 35 is rotated 180° in the C-axis direction, and as shown in FIG. 8, the two surface portions 1-1, 1-2 to be machined on the upper surface are arranged on the upper side, i.e., closer to the rotary tool 2. At this time, the rotating table 35 is arranged in the fourth posture.

In a state in which the rotating table 35 is arranged at this position in the fourth posture, linear feeding is performed in the three orthogonal axes (X-axis, Y-axis, Z-axis), and the other 1-2 of the two surface portions to be test-machined on the upper surface of the test workpiece 1 is machined with the side surface of the rotary tool 2. At this time, the machining parameters of the surface portion 1-1 and the surface portion 1-2 are set in the machining program so as to achieve a machined surface without steps therebetween. Next, the other surface portion 1-7 of the two surface portions to be machined on each of the four side surfaces connected perpendicularly to the upper surface of the test workpiece 1 is machined with the tip of the rotary tool 2, as shown in FIG. 9.

Next, when the machining of the surface portion 1-7 is complete, the C-axis is rotated by 90°, the rotating table 35 is arranged in the fifth posture, and the surface portion 1-8 is machined with the tip of the rotary tool 2. When the machining of the surface portion 1-8 is complete, the C-axis is further rotated by 90°, the rotating table 35 is arranged in the second posture, and the surface portion 1-9 is machined with the tip of the rotary tool 2. Likewise, when the machining of the surface portion 1-9 is complete, the C-axis is further rotated by 90°, the rotating table 35 is arranged in the third posture, and the surface portion 1-10 is machined with the tip of the rotary tool 2. The machining mode by such linear feeding in the orthogonal three axis (X-axis, Y-axis, Z-axis) directions and rotary feeding by two rotary feed shafts (B-axis, C-axis) is referred to as five-axis machining. The machining parameters are set in the machining program so as to achieve a machined surface without steps between the surface portion 1-3 and the surface portion 1-7; the surface portion 1-4 and the surface portion 1-8; the surface portion 1-5 and the surface portion 1-9; and the surface portion 1-6 and the surface portion 1-10.

After machining of all of the surface portions to be machined is complete in this manner, the rotating table 35 is arranged in the first posture. At this time, the upper surface of the test workpiece 1 is arranged perpendicular to the Z-axis, two of the four side surfaces connected perpendicularly to the top surface, and in FIG. 9, the side surfaces having the surface portions 1-3, 1-7 and the surface portions 1-5, 1-9, are arranged perpendicular to the Y-axis, and the side surfaces having the surface portions 1-4, 1-8 and the surface portions 1-6, 1-10 are arranged perpendicular to the X-axis. At the same time, the rotary tool 2 is removed from the spindle 25, and the measurement device 40 is attached to the spindle 25 in place thereof. The measurement device 40 can be a touch sensor which outputs a signal when a measurement probe 40a comes into contact with the surface of the object to be measured.

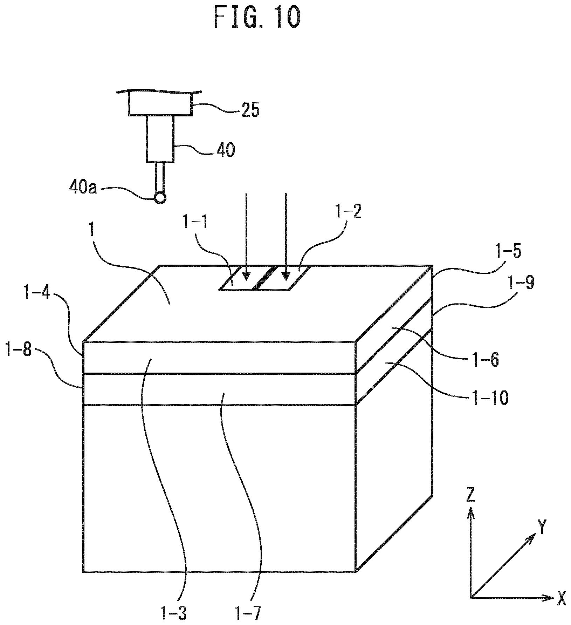

Next, as shown in FIG. 10, the measurement probe 40a of the measurement device 40 is arranged above each of the two surface portions 1-1 and 1-2 on the upper surface of the test workpiece 1, and the Z co-

ordinates $Z_{1-1}$ and $Z_{1-2}$ of the two surface portions 1-1 and 1-2 are measured by drawing the measurement probe 40a toward the test workpiece 1 along the Z axis. Specifically, the measurement device 40 transmits a signal indicating that the measurement probe 40a has contacted each of the surface portions 1-1 and 1-2 to the calculation unit 76, and the calculation unit 76 detects the Z coordinate when a measurement sphere 44 of the measurement probe 40a comes into contact with each of the surface portions 1-1 and 1-2, and stores the Z coordinate in the storage unit 77.

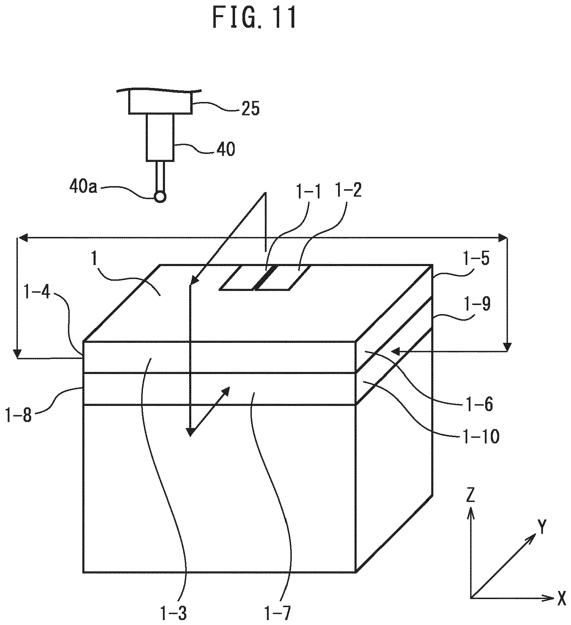

Next, as shown in FIG. 11, the measurement probe 40a is linearly fed in a direction perpendicular to the surface portions 1-3, 1-4, 1-5, 1-6 and surface portions 1-7, 1-8, 1-9, 1-10 of each of the four side surfaces connected to the upper surface of test workpiece 1, and the measurement probe 40a of the measurement device 40 comes into contact with each of the surface portions. Likewise, the calculation unit 76 detects the coordinate values at that time, and stores them in the storage unit 77. More specifically, the Y-coordinates $Y_{1-3}$, $Y_{1-5}$ of the surface portions 1-3, 1-5, the Y-coordinates $Y_{1-7}$, $Y_{1-9}$ of surface portions 1-7, 1-9, the X coordinates $X_{1-4}$, $X_{1-6}$ of surface portions 1-4, 1-6, and the X coordinates $X_{1-8}$, $X_{1-10}$ of the surface portions 1-8, 1-10 are stored in the storage unit 77.

Based on the measurement results, the calculation unit 76 calculates coordinates $(X_{C3}, Y_{C3}) = ((X_{1-4} + X_{1-6}) / 2, (Y_{1-3} + Y_{1-5}) / 2)$ of the center C3 of the surface portions 1-3, 1-4, 1-5, 1-6 machined by three-axis machining and the coordinates $(X_{C5}, Y_{C5}) = ((X_{1-8} + X_{1-10}) / 2, (Y_{1-7} + Y_{1-9}) / 2)$ of the center C5 of the surface portions 1-3, 1-4, 1-5, 1-6 machined by five-axis machining. Next, the calculation unit 76 calculates an X direction deviation $\alpha = ((X_{1-4} + X_{1-6}) / 2) - ((X_{1-8} + X_{1-10}) / 2)$ of the center C5 by five-axis machining with respect to the center C3 by three-axis machining and a Y-direction deviation $\beta = ((Y_{1-3} + Y_{1-5}) / 2) - ((Y_{1-7} + Y_{1-9}) / 2)$. The calculation results are stored in the storage unit 77.

Next, the calculation unit 76 calculates distances in the X and Y directions of the surface portions 1-3, 1-4, 1-5, 1-6 machined by three-axis machining, and specifically, the distance $\gamma 3 = |X_{1-4} - X_{1-6}|$ between surface portions 1-4 and 1-6 and distance $\delta 3 = |Y_{1-3} - Y_{1-5}|$ between surface portions 1-3 and 1-5, calculates distances in the X and Y directions of the surface portions 1-7, 1-8, 1-9, 1-10 machined by five-axis machining, and specifically, the distance $\gamma 5 = |X_{1-8} - X_{1-10}|$ between surface portions 1-8 and 1-10 and the distance $\delta 5 = |Y_{1-7} - Y_{1-9}|$ between surface portions 1-7 and 1-9, and stores the calculation results in the storage unit 77.

Next, the calculation unit 76 calculates the differential $\gamma = \gamma 3 - \gamma 5$ between the distance $\gamma 3$ between the surface portions in the X direction by three-axis machining and the distance $\gamma 5$ between the surface portions in the X direction by five-axis machining, and the differential $\delta = \delta 3 - \delta 5$ between the distance $\delta 3$ between the surface portions in the Y direction by five-axis machining and the distance $\delta 5$ between the surface portions in the X direction by five-axis machining, and stores the calculation results in the storage unit 77. Further, the calculation unit 76 calculates the average value $\lambda = (\gamma + \delta) / 4$ of the differential between three-axis machining and five-axis machining with respect to the distance between the surface portions in the X direction and the distance between the surface portions in the Y direction, and stores the calculation results in the storage unit 77.

Next, the calculation unit 76 calculates the differential $\varepsilon = Z_{1-1} - Hz$ between the target value Hz in the Z direction of the surface portion 1-1 machined by three-axis machining of the test workpiece 1 and the Z coordinate $Z_{1-1}$, which is a measurement value, and the differential $\zeta = Z_{1-2} - Hz$ between the target value Hz in the Z direction of the surface portion 1-2 machined by five-axis machining of the test workpiece 1 and the Z coordinate $Z_{1-2}$, which is a measurement value, and stores the calculation results in the storage unit 77.

Further, the calculation unit 76 calculates the differential $Dx = Lx - \gamma 3$ between the target value Lx in the X direction of the test workpiece 1 and the distance $\gamma 3$ between the surface portions in the X direction by three-axis machining, and the differential $Dy = Ly - \delta 3$ between the target value Ly in the Y direction and the distance $\delta 3$ between the surface portion in the Y direction. The calculation unit 76 further calculates the average value $\eta = (Dx + Dy) / 4$ thereof, and stores the calculation results in the storage unit 77.

Based on the calculation results described above, the calculation unit 76 determines correction amounts CV as follows.

$$CV1 = \alpha$$

$$CV2 = \beta$$

$$CV3 = -(\zeta + \eta) / 2$$

$$CV4 = \lambda + CV3$$

$$CV5 = ((\zeta + CV3)) + (\varepsilon + CV4)) / 2$$

CV1 is the correction amount of the center of rotation of rotating table 35 in the X direction, CV2 is the correction amount of the center of rotation of rotating table 35 in the Y direction, CV3 is Z-axis correction amount, CV4 is the correction amount of the tool measurement device in the tool length direction of the rotary tool 2, and CV5 is the correction amount of the Z coordinates in the workpiece coordinate system (calibration value in the Z direction of the measurement device 40).

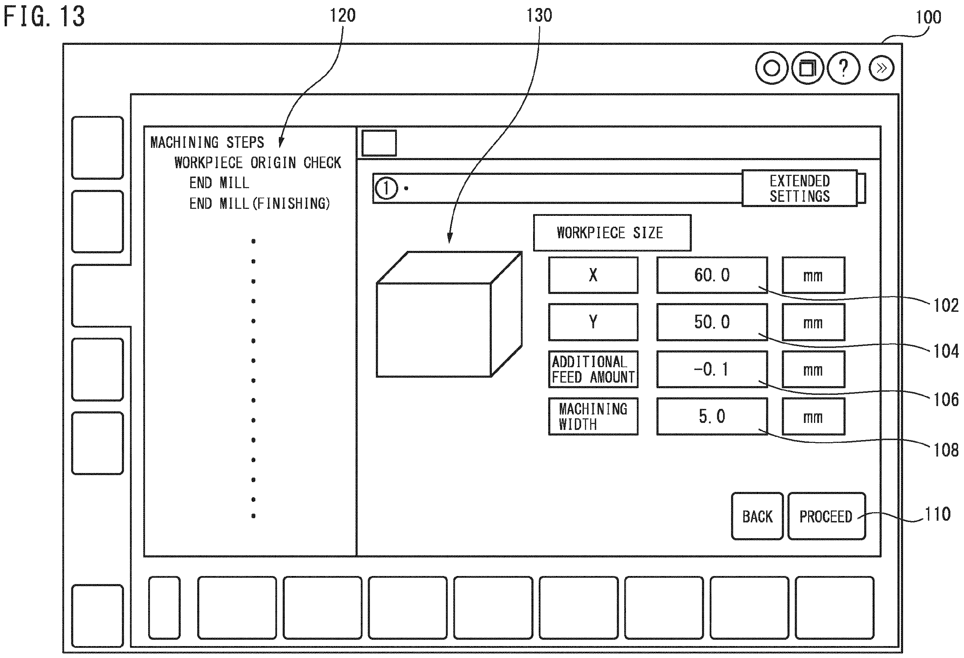

The measurement of the test workpiece 1 described above can be automatically performed by inputting an automatic measurement program as an input program 71 into the controller 70. When the controller 70 executes the automatic measurement program, for example, the input screen shown in FIG. 13 is displayed on a display device such as a touch panel attached to the control panel (not illustrated) of the machine tool 11.

The input screen 100 includes areas 102, 104, 106, 108 for inputting machining parameters such as dimensions in the X, Y, and Z directions as the size of the test workpiece 1 and a cutting amount (depth from the surface of the test workpiece 1). One of the areas 102, 104, 106, 108 is activated, and a numerical value is input to each of the areas 102, 104, 106, 108 using an input device (not illustrated) such as a keyboard. The input machining parameters of the test workpiece 1 are stored in the storage unit 77. The input screen 100 can include an area 120 for displaying the machining steps of the test workpiece 1 such as a workpiece origin check, the type of tool to be used, etc. Further, an approximate shape 130 of the test workpiece 1 may be displayed.

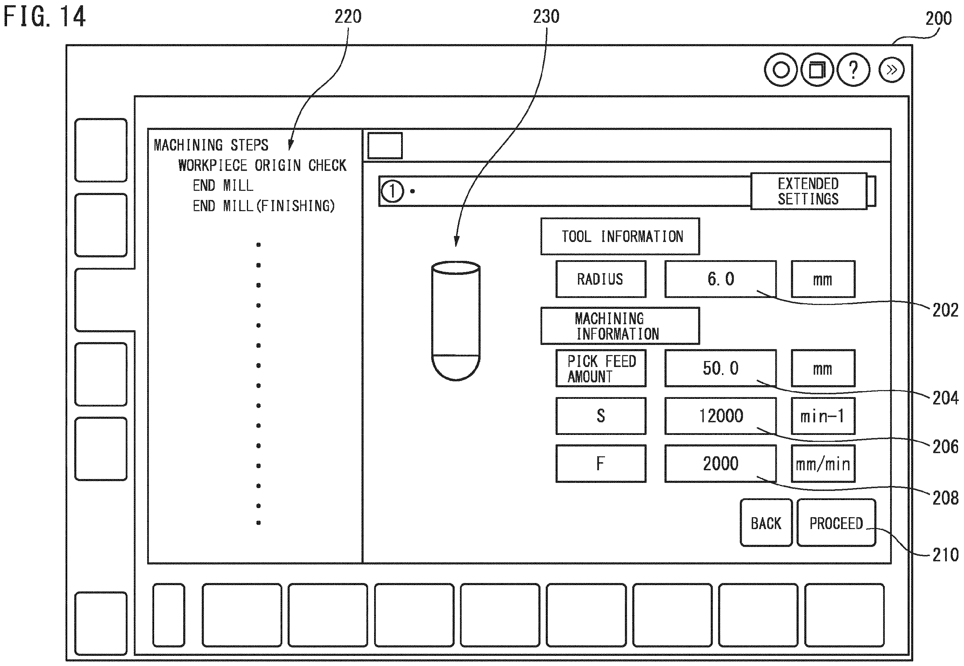

By tapping the proceed button 110 after input is complete, the tool information input screen 200 shown in FIG. 14 can be displayed. The tool information input screen 200 includes an area for inputting tool parameters such as tool diameter, areas 202, 204, 206, 208 for inputting a pick feed amount, spindle rotation speed, and feed speed as machining conditions. The input tool parameters and machining conditions are stored in the storage unit 77. The input screen 100 can include an area 220 for displaying the machining steps of the test workpiece 1 such as a workpiece origin check, the type of tool to be used, etc. Further, an approximate shape 230 of the tool used for machining the test workpiece 1 may be displayed.

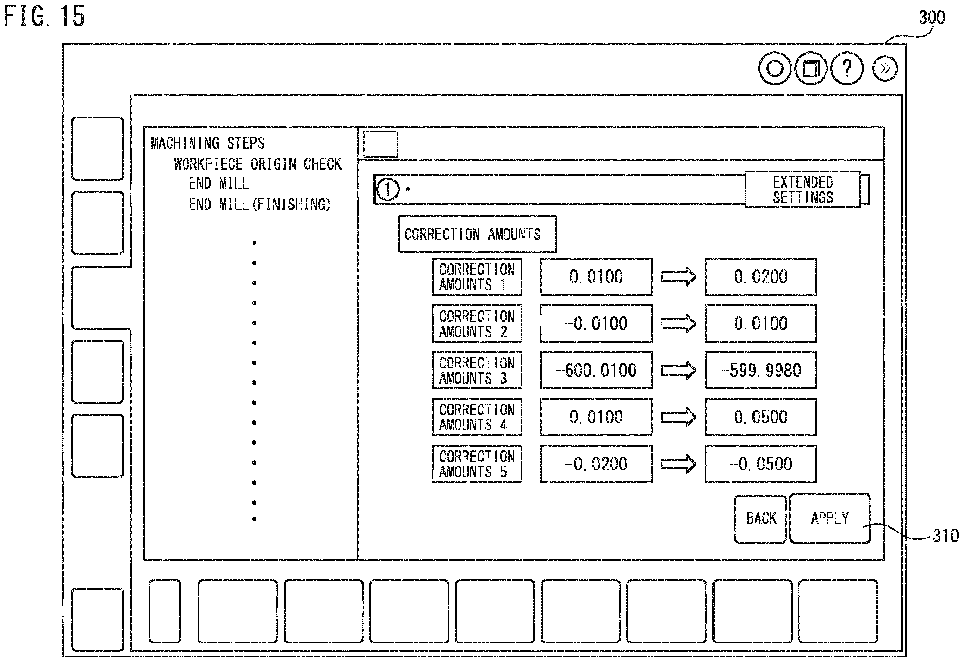

By tapping the proceed button 210 after the input is complete, the test workpiece 1 is machined and measured as described above, and the calculation results of the correction amounts can be displayed on the correction amount display screen 300 shown in FIG. 15. The operator confirms the correction amounts and taps the apply button 310 to perform machining to which the correction amounts are applied during main machining.

DESCRIPTION OF REFERENCE SIGNS

| | |
|---|---|
| 1 | Test Workpiece |
| 1-1 | Surface Portion |
| 1-10 | Surface Portion |
| 1-2 | Surface Portion |
| 1-3 | Surface Portion |
| 1-4 | Surface Portion |
| 1-5 | Surface Portion |
| 1-6 | Surface Portion |
| 1-7 | Surface Portion |
| 1-8 | Surface Portion |
| 1-9 | Surface Portion |
| 2 | Rotary Tool |
| 11 | Machine Tool |
| 13 | Bed |
| 15 | Column |
| 17 | Saddle |
| 19a | X-axis Rail |
| 19b | X-axis Rail |
| 21 | Spindle Head |
| 23a | Z-axis Rail |
| 23b | Z-axis Rail |
| 25 | Spindle |
| 27 | Moving Body |
| 28 | Inclining Turntable |
| 29a | Y-axis Rail |
| 29b | Y-axis Rail |
| 35 | Rotating Table |
| 35a | Workpiece Attachment Surface |
| 40 | Measurement Device |
| 40a | Measurement Probe |
| 52 | Axis |
| 53 | Axis |
| 70 | Controller |
| 71 | Input Program |
| 72 | Reading and Interpretation Unit |
| 73 | Interpolation Calculation Unit |
| 74 | Servo Motor Control Unit |
| 75 | Axial Servo Motor |
| 76 | Calculation Unit |
| 77 | Storage Unit |
| 100 | Input Screen |
| 200 | Tool Information Input Screen |
| 300 | Correction Amount Display Screen |
| C3 | Center |
| C5 | Center |
| CV | Correction Amount |
| Dx | Differential |
| Dy | Differential |
| Hz | Target Value |
| Lx | Target Value |
| Ly | Target Value |
| T | Rotary Tool |
| W | Workpiece |
| $\alpha$ | Deviation |
| $\beta$ | Deviation |
| $\gamma$ | Differential |
| $\gamma 3$ | Distance |
| $\gamma 5$ | Distance |
| $\delta$ | Differential |
| $\delta 3$ | Distance |
| $\delta 5$ | Distance |
| $\varepsilon$ | Differential |
| $\zeta$ | Differential |
| $\eta$ | Average Value |
| X | Average Value |

**Claims**

1. A machining method wherein machining is performed by moving a rotary tool attached to a spindle and a workpiece affixed to a rotating table relative to each other with a machine tool having linear feed shafts and rotary feed shafts, the method comprising the steps of:

   affixing a test workpiece to the rotating table,
   positioning the test workpiece in a plurality of postures and machining a predetermined portion of a surface of the test workpiece with a rotary tool to be used during main machining of the workpiece,
   measuring each machined surface portion of the test workpiece,
   correcting, based on the measured results, an error of the rotary feed shaft with position information of a center of rotation of the rotating table relative to the machine coordinate system and a tool length correction amount of the rotary tool, and
   machining the workpiece.

2. The machining method according to claim 1, wherein the machine tool comprises three orthogonal axis linear feed shafts, a rotary feed shaft about an axis parallel to one of the three orthogonal axes, and a rotary feed shaft about an axis different than an axis of the rotary feed shaft, and
   the test workpiece has a rectangular cuboid shape, and when one surface of the test workpiece is oriented perpendicular to one of the three orthogonal axes, a predetermined portion of the surface of the test workpiece to be machined includes two portions on a surface facing a tip of the rotary tool and two portions on each of four side surfaces connected to the surface.

3. The machining method according to claim 2, wherein one of the two surface portions to be machined of the surface facing the rotary tool is machined with the tip of the rotary tool, and the other is machined with a side surface of the rotary tool.

4. The machining method according to claim 3, wherein one of the two surface portions to be machined of each of the four side surfaces connected to the surface facing the rotary tool is machined with the tip of the rotary tool, and the other is machined with the side surface of the rotary tool.

5. The machining method according to any one of claims 1 to 4, wherein the rotary tool is a ball end mill.

# FIG. 1

FIG. 2

FIG. 3

FIG. 4

# FIG. 5

EP 4 134 762 A1

# FIG. 6

# FIG. 7

# FIG. 8

# FIG. 9

# FIG. 10

# FIG. 11

# FIG. 12

# FIG. 13

MACHINING STEPS
  WORKPIECE ORIGIN CHECK
  END MILL
  END MILL (FINISHING)

① ·   EXTENDED SETTINGS

WORKPIECE SIZE

| | | |
|---|---|---|
| X | 60.0 | mm |
| Y | 50.0 | mm |
| ADDITIONAL FEED AMOUNT | -0.1 | mm |
| MACHINING WIDTH | 5.0 | mm |

BACK  PROCEED

EP 4 134 762 A1

FIG. 14

MACHINING STEPS
    WORKPIECE ORIGIN CHECK
    END MILL
    END MILL(FINISHING)

① ·

EXTENDED SETTINGS

TOOL INFORMATION

RADIUS | 6.0 | mm

MACHINING INFORMATION

PICK FEED AMOUNT | 50.0 | mm

S | 12000 | min-1

F | 2000 | mm/min

BACK    PROCEED

EP 4 134 762 A1

19

FIG. 15

300

MACHINING STEPS
   WORKPIECE ORIGIN CHECK
     END MILL
     END MILL(FINISHING)

① ·

EXTENDED SETTINGS

CORRECTION AMOUNTS

| CORRECTION AMOUNTS 1 | 0.0100 | ⟹ | 0.0200 |
| CORRECTION AMOUNTS 2 | -0.0100 | ⟹ | 0.0100 |
| CORRECTION AMOUNTS 3 | -600.0100 | ⟹ | -599.9980 |
| CORRECTION AMOUNTS 4 | 0.0100 | ⟹ | 0.0500 |
| CORRECTION AMOUNTS 5 | -0.0200 | ⟹ | -0.0500 |

BACK | APPLY

310

EP 4 134 762 A1

# EP 4 134 762 A1

| INTERNATIONAL SEARCH REPORT | International application No. |
|---|---|
| | PCT/JP2021/015080 |

**A. CLASSIFICATION OF SUBJECT MATTER**
Int. Cl. G05B19/404(2006.01)i, B23Q17/00(2006.01)i, B23Q17/22(2006.01)i
FI: G05B19/404 G, B23Q17/00 Z, B23Q17/22 A

According to International Patent Classification (IPC) or to both national classification and IPC

**B. FIELDS SEARCHED**

Minimum documentation searched (classification system followed by classification symbols)
Int. Cl. G05B19/00-19/46, B23Q17/00

Documentation searched other than minimum documentation to the extent that such documents are included in the fields searched
Published examined utility model applications of Japan       1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2009/057229 A1 (MAKINO MILLING MACHINE CO., LTD.) 07 May 2009, p. 15, line 18 to p. 20, line 25, fig. 12-19 | 1-2, 5 |
| A | WO 2012/101742 A1 (MITSUBISHI ELECTRIC CORP.) 02 August 2012, entire text, all drawings | 1-5 |
| A | WO 2017/130412 A1 (NIKON CORP.) 03 August 2017, entire text, all drawings | 1-5 |
| A | JP 2019-40586 A (FANUC LTD.) 14 March 2019, entire text, all drawings | 1-5 |
| A | KR 10-2019-0002099 A (HYUNDAI WIA CORPORATION) 08 January 2019, entire text, all drawings | 1-5 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31.05.2021 | 08.06.2021 |

| Name and mailing address of the ISA/ Japan Patent Office 3-4-3, Kasumigaseki, Chiyoda-ku, Tokyo 100-8915, Japan | Authorized officer |
| | Telephone No. |

Form PCT/ISA/210 (second sheet) (January 2015)

## INTERNATIONAL SEARCH REPORT
Information on patent family members

International application No.

PCT/JP2021/015080

| Patent Documents referred to in the Report | Publication Date | Patent Family | Publication Date |
|---|---|---|---|
| WO 2009/057229 A1 | 07.05.2009 | US 2010/0207567 A1 paragraphs [0059]-[0089], fig. 12-19 EP 2208572 A1 CA 2704365 A1 KR 10-2010-0047906 A CN 101842189 A | |
| WO 2012/101742 A1 | 02.08.2012 | US 2013/0282328 A1 entire text, all drawings DE 112011104760 T5 CN 103328154 A | |
| WO 2017/130412 A1 | 03.08.2017 | (Family: none) | |
| JP 2019-40586 A | 14.03.2019 | US 2019/0064763 A1 entire text, all drawings DE 102018214072 A1 CN 109426217 A | |
| KR 10-2019-0002099 A | 08.01.2019 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005061834 A